# EUROPEAN PATENT APPLICATION

(11) **EP 4 484 486 A1**
(43) Date of publication of application: **01.01.2025**
(21) Application number: 22928126.6
(22) Date of filing: 13.07.2022
(51) Int. Cl.: C08K 5/3492, C08K 5/3435, C08L 75/04, C09D 175/04

(54) **REACTIVE COMPOSITE LIGHT STABILIZER AND USE THEREOF, AND LIGHT-STABLE MODIFIED POLYMER MATERIAL**

(30) Priority: 24.02.2022 CN 202210176909
(71) Applicant: Rianlon Corporation, Tianjin 300480 (CN)
(72) Inventor: YANG, Wei, Tianjin 300480 (CN); ZHANG, Huijing, Tianjin 300480 (CN); LI, Yanqing, Tianjin 300480 (CN); LUO, Hai, Tianjin 300480 (CN); FAN, Xiaopeng, Tianjin 300480 (CN)
(74) Representative: Hoffmann Eitle
(86) International application number: PCT/CN2022/105379
(87) International publication number: WO 2023/159857

(57) **Abstract**

Provided in the present invention are a reactive composite light stabilizer and the use thereof, and a light-stable modified polymer material. The reactive composite light stabilizer comprises a reactive ultraviolet light absorber and a reactive hindered amine light stabilizer, the reactive ultraviolet light absorber being a reactive triazine ultraviolet light absorber. The reactive triazine ultraviolet light absorber and the reactive hindered amine light stabilizer are combined to achieve a higher absorptivity, a better combining effect, a lower volatility and a higher light-degradation resistance stability, and, both being reactive components, they can exist in the form of chemical bonding in a polymer material, thus having a better long-effective property.

## Description

This application is based on and claims priority to CN Application No.202210176909.7, filed on February 24, 2022, the disclosure of which is again incorporated herein as a whole.

### TECHNICAL FIELD

The present invention relates to the technical field of polymer material modification, specifically, relates to a reactive composite light stabilizer and use thereof, and light-stable modified polymer material.

### BACKGROUND

With the increasing progress of material technology, the unique and excellent properties brought by various polymer materials have expanded the huge development space of modern society. Polymer materials play an important role in various fields of the national economy and people's livelihood, but their aging characteristics are a very serious limiting factor. The aging of polymers will inevitably affect their performance, resulting in reduced lifetime and waste of resources. Factors causing polymer aging are mainly light and heat, of which the ultraviolet light in natural sunlight has a particularly significant impact on the long-effective property of polymers. At present, preventing outdoor light aging is mainly solved by adding light stabilizers. Such light stabilizers comprise ultraviolet light absorbers and hindered amine light stabilizers. The ultraviolet light absorbers can absorb or shield the ultraviolet light that can cause damage to polymers, and the hindered amine light stabilizers can remove the free radicals that lead to the degradation of polymers. The hindered amine light stabilizers can significantly alleviate the aging process of polymer materials and are an important product category in the field of polymer anti-aging.

The ultraviolet light absorber (referred to as UVA) and the hindered amine light stabilizer (referred to as HALS) show a synergistic effect, thus significantly raising the anti-aging effect of polymers. Therefore, UVA combined with HALS has been successfully applied in many fields of polymer materials. The current conventional combination of UVA and HALS may encounter the following problems:
1. The problem of material applicability: manifested in two aspects. One is the problem caused by the alkalinity of HALS, which is directly determined by the groups connected to the nitrogen atom in the piperidine ring. The general rule is (alkalinity from strong to weak): N-H> N-R> N-OR> N-COR. HALS with high alkalinity will interact with unfavorable substances in the material system, such as acid catalysts, driers etc., resulting in lower expected performance of the final product. Therefore, HALS with low alkalinity has a more tolerant usage scenario and is the trend of future development. The other is the problem brought by the compatibility of materials and light-stable products. According to the principle of "similar compatibility", the polarity of the material system may affect the compatibility of additive products (containing HALS), resulting in problems such as precipitation. (Note: The compatibility herein refers to the compatibility phenomenon that occurs immediately during the production process of polymer materials, which is distinguished from the slow migration below.)
2. The problem of long-effective property: HALS can function normally under general conditions of use, since it can alleviate aging by capturing free radicals to ultimately protect the material. However, in the case of high temperature, as well as environmental substances erosion, traditional HALS will cause losses through physical means (volatilization, migration, dissolution), ultimately failing to achieve the protective effect of the material. A typical application scenario is plastic coatings. When polymer coatings are applied to the surface of plastic products, small molecules in the coating, such as light stabilizers, will slowly migrate into the same polymer plastic substrate. Over time, the concentration of light stabilizers in the coatings will become lower and lower, making it impossible to achieve the protective effects, leading to premature aging and degradation of the polymer substrate in the coatings.

If the ultraviolet light absorbers (referred to as UVA) or the hindered amine light stabilizers (referred to as HALS) are designed as reactive, connecting the light stabilizers to the polymer chains above through chemical cross-linking can solve the material applicability problem mentioned above, as well as achieve long-term protective effects. However, although the reactive UVA (such as UV-400, liquid) and the reactive HALS (such as Tinuvin 152, powder) which are reactive alone have been developed, there are few products that combine reactive UVA with reactive HALS to achieve better anti-aging effect. On the one hand, this is due to the fact that the available reactive UVA and reactive HALS cannot form a stable and homogeneous composite. On the other hand, since the applicability and long-effective property problems faced by the materials arise with the progress of the materials themselves and the upgrading of the products, they have not yet attracted enough attention. Moreover, most of the reactive UVA and reactive HALS composites are not significantly improved in effect, and there may also be problems such as volatility.

### SUMMARY

The main purpose of the present invention is to provide a reactive composite light stabilizer and use thereof, and a light-stable modified polymer material, in order to solve the problems of high volatility and poor long-effective property of the light stabilizers in polymer materials in the prior art.

In order to achieve the above purpose, according to one aspect of the present invention, provided is a reactive composite light stabilizer, comprising a reactive ultraviolet light absorber and a reactive hindered amine light stabilizer, and the reactive ultraviolet light absorber is a reactive triazine ultraviolet light absorber.

Further, the reactive ultraviolet light absorber is selected from a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and/or 2-[2-hydroxy-4-[3-(2-ethylhexyloxy)-2-hydroxypropoxy]phenyl]-4,6-bis(2,4-dimethylphenyl)-1,3,5-triazine; the reactive hindered amine light stabilizer is selected from 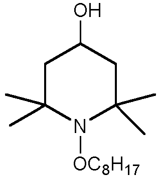 and/or 2,4-bis[N-butyl-(1-cyclohexyloxy-2,2,6,6-tetramethylpiperidin-4-yl)amino]-6-(2-hydroxyethylamine)-1,3,5-triazine; preferably, the reactive ultraviolet light absorber and the reactive hindered amine light stabilizer are both liquid or both solid at room temperature between 20°C and 30°C.

Further, the reactive ultraviolet light absorber is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and the reactive hindered amine light stabilizer is 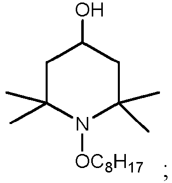 or, the reactive ultraviolet light absorber is 2-[2-hydroxy-4-[3-(2-ethylhexyloxy)-2-hydroxypropoxy]phenyl]-4,6-bis(2,4-dimethylphenyl)-1,3,5-triazine, and the reactive hindered amine light stabilizer is 2,4-bis[N-butyl-(1-cyclohexyloxy-2,2,6,6-tetramethylpiperidin-4-yl)amino]-6-(2-hydroxyethylamine)-1,3,5-triazine.

Further, the weight ratio of the reactive ultraviolet light absorber to the reactive hindered amine light stabilizer is (0. 1-10): 1, preferably (1-5): 1, more preferably 2:1.

According to another aspect of the present invention, further provided is use of the reactive composite light stabilizer in polymer material.

According to yet another aspect of the present invention, further provided is use of a reactive hindered amine light stabilizer in polymer material, wherein the reactive hindered amine light stabilizer is 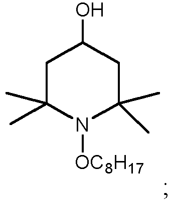 preferably, the polymer material is a coating.

According to yet another aspect of the present invention, further provided is a light-stable modified polymer material, comprising a polymer material and a light stabilizer, wherein the light stabilizer is the reactive composite light stabilizer mentioned above.

Further, the polymer material is one or more of a polyurethane material, an amino resin material, an acrylic resin material and an epoxy resin material; preferably, the polymer material is a coating, an adhesive, a foaming material or an elastomer.

Further, the polymer material is an amino acrylic resin coating, an acrylic polyurethane varnish, or a polyurethane powder coating.

Further, when the polymer material is the amino acrylic resin coating or the acrylic polyurethane varnish, the reactive ultraviolet light absorber in the reactive composite light stabilizer is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and the reactive hindered amine light stabilizer is 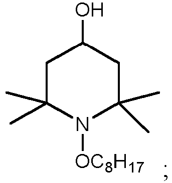 when the polymer material is the polyurethane powder coating, the reactive ultraviolet light absorber in the reactive composite light stabilizer is 2-[2-hydroxy-4-[3-(2-ethylhexyloxy)-2-hydroxypropoxy]phenyl]-4,6-bis(2,4-dimethylphenyl)-1,3,5-triazine, and the reactive hindered amine light stabilizer is 2,4-bis[N-butyl-(1-cyclohexyloxy-2,2,6,6-tetramethylpiperidin-4-yl)amino]-6-(2-hydroxyethylamine)-1,3,5-triazine.

Further, the reactive composite light stabilizer is incorporated into polymer material in an amount of 0.1~5wt%, preferably 1-2%.

Compared with other types of reactive ultraviolet light absorbers such as reactive benzotriazoles, the combination of a reactive triazine ultraviolet light absorber and a reactive hindered amine light stabilizer can achieve a higher absorptivity, a better combining effect, a lower volatility, and a higher stability resistant to light-degradation, and, both being reactive components, they can exist in the form of chemically bonding in a polymer material, thus having a better long-effective property.

### BRIEF DESCRIPTION OF DRAWINGS

The drawings, which are included to provide a further understanding of the present invention, constitute a part of the present application. The illustrative examples of the present invention together with the detailed description serve to explain the present invention and do not constitute an improper limitation of the present invention. In the drawings:
Fig. 1 shows the photographs of the cured paint film of the coating in Example A-1 and Comparative Example A-1 of the present invention, wherein Fig. 1a shows Comparative Example A-1 and Fig. 1b shows Example A-1;
Fig. 2 shows the photographs of the cured paint film of the coating in Example A-2, Comparative Example A-2, and Comparative Example A-3 of the present invention, wherein Fig. 2a shows Comparative Example A-2, Fig. 2b shows Comparative Example A-3, and Fig. 2c shows Example A-2;
Fig. 3 shows the change curves of chromatic aberration during QUV aging test for the coatings in Example B-1 and Comparative Examples B-1 to B-3;
Fig. 4 shows the change curves of chromatic aberration during QUV aging test for the coatings in Examples B-2 to B-3 and Comparative Examples B-4 to B-7; and
Fig. 5 shows the change curves of chromatic aberration during QUV aging test for the coatings in Example B-4, Comparative Example B-8, and Comparative Example B-9.

### DETAILED DESCRIPTION OF THE INVENTION

It should be noted that, without conflict, the examples and the features in the examples of the present application may be combined with each other. The present invention is described in detail below in connection with the examples.

The present invention provides a reactive composite light stabilizer, comprising a reactive ultraviolet light absorber and a reactive hindered amine light stabilizer, and the reactive ultraviolet light absorber is a reactive triazine ultraviolet light absorber.

The reactive composite light stabilizer provided according to the present invention comprises a reactive ultraviolet light absorber and a reactive hindered amine light stabilizer, and the reactive ultraviolet light absorber is a reactive triazine ultraviolet light absorber. Compared with other types of reactive ultraviolet light absorbers such as a reactive benzotriazole, the combination of a reactive triazine ultraviolet light absorber and a reactive hindered amine light stabilizer can achieve a higher absorptivity, a better combining effect, a lower volatility, and a higher stability resistant to light-degradation, and, both being reactive components, they can exist in the form of chemically bonding in a polymer material, thus having a better long-effective property.

More preferably, the reactive ultraviolet light absorber is selected from a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine (such as UV-400), and/or 2-[2-hydroxy-4-[3-(2-ethylhexyloxy)-2-hydroxypropoxy]phenyl]-4,6-bis(2,4-dimethylphenyl)-1,3,5-triazine (such as UV-405); the reactive hindered amine light stabilizer is selected from 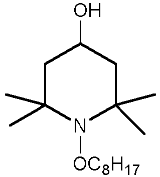 ( Abbreviated as RLHA) and/or 2,4-bis[N-butyl-(1-cyclohexyloxy-2,2,6,6-tetramethylpiperidin-4-yl)amino]-6-(2-hydroxyethylamine)-1,3,5-triazine; preferably, both the reactive ultraviolet light absorber and the reactive hindered amine light stabilizer are liquid or solid at room temperature between 20°C and 30°C.

Both the reactive ultraviolet light absorber and the reactive hindered amine light stabilizer are liquid or both solid at room temperature between 20°C and 30°C. Based on the same morphology, the reactive ultraviolet light absorber and the reactive hindered amine light stabilizer can form better combination, with better compatibility in polymer materials, for example, with significant compatibility improvement in some polymer materials with high polarity, high acidity and requiring adding a large amount of light stabilizer. And due to being both reactive components, they can exist in the form of chemically bonding in polymer materials, and significantly reduce the loss of light stabilizers caused by physical methods (volatilization, migration, dissolution, etc.). Therefore, they have better a long-effective property and can provide long-term effect protection for polymer materials.

In one preferred embodiment, the reactive ultraviolet light absorber is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine (such as UV-400), and the reactive hindered amine light stabilizer is 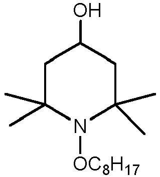 (abbreviated as RLHA); or, the reactive ultraviolet light absorber is 2-[2-hydroxy-4-[3-(2-ethylhexyloxy)-2-hydroxypropoxy]phenyl]-4,6-bis(2,4-dimethylphenyl)-1,3,5-triazine (UV-405), and the reactive hindered amine light stabilizer is 2,4-bis[N-butyl-(1-cyclohexyloxy-2,2,6,6-tetramethylpiperidin-4-yl)amino]-6-(2-hydroxyethylamine)-1,3,5-triazine (UV-152). RLHA is in liquid form at room temperature, with high operational convenience, and can form more homogeneous and stable composites with liquid ultraviolet light absorbers such as UV-400. Its structure retains the main body of N-OR with low alkalinity and introduces a hydroxyl group at the other end that can participate in a reaction. Hydroxyl group can chemically cross-link with functional group in polymer material, such as isocyanate group in polyurethane material, free amine or ether bond on amino resin, and epoxy group in epoxy material. Ultimately, small molecules of the hindered amine light stabilizers are bonded to the chains of polymer substrate. These characteristics of RLHA are utilized to achieve widespread compatibility. Combined with the reactive UV-400, it can achieve more excellent long-term anti-aging performance. UV-405 and UV-152 are both reactive reagents in powder form, which also have a good combining effect and a good compatibility in polymer materials. The composite light stabilizer formed by UV-405 and UV-152 can also play a better long-term anti-aging performance.

More preferably, the weight ratio of the reactive ultraviolet light absorber to the reactive hindered amine light stabilizer is (0.1~10):1, preferably (1-5): 1, more preferably 2:1. By controlling the weight ratio of the two within the above range, in addition to a better combining effect, it can achieve more significant synergistic effect when applied to polymer materials.

According to another aspect of the present invention, further provided is use of the above reactive composite light stabilizer in polymer material. The reactive composite light stabilizer comprises a reactive ultraviolet light absorber and a reactive hindered amine light stabilizer, and the reactive ultraviolet light absorber is a reactive triazine ultraviolet light absorber. Compared with other types of reactive ultraviolet light absorbers such as a reactive benzotriazole, the combination of a reactive triazine ultraviolet light absorber and a reactive hindered amine light stabilizer can achieve a higher absorptivity, a better combining effect, a lower volatility, and a higher stability resistant to light-degradation. And due to both being reactive components, they can exist in the form of chemical bonding in polymer materials, thus having a better long-effective property.

In addition, in view of the fact that there is no implementation in the prior art of using 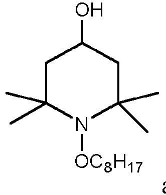 as an anti-aging modifier in polymer materials, the present invention further provides use of 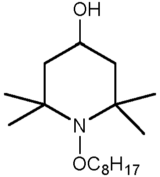 as a reactive hindered amine light stabilizer in polymer materials. In addition to the beneficial effects of the combination with the reactive ultraviolet light absorber mentioned above in polymer materials, using 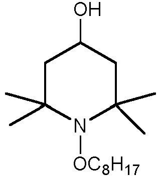 alone can also play an anti-aging role. Although it is not as good as the reactive composite light stabilizer mentioned above of the present invention, in terms of the long-effective property, its effect is significantly improved compared with the hindered amine light stabilizer used conventionally now. In particular, the hindered amine light stabilizer also offers more excellent compatibility than a conventional product in terms of compatibility and coating curing.

According to yet another aspect of the present invention, further provided is a light-stable modified polymer material, comprising a polymer material and a light stabilizer, wherein the light stabilizer is the reactive composite light stabilizer mentioned above.

In one preferred embodiment, the polymer material is one or more of a polyurethane material, an amino resin material, an acrylic resin material and an epoxy resin material. In the above types of polymer materials, there are functional groups such as an isocyanic acid group, an amino group, an ether bond, and an epoxy group in the polymer chain. When applied in polymer materials, on the one hand, the reactive composite light stabilizers can be better compatible with these materials, and on the other hand, they are able to cross-linking with these groups to better bind to the polymer chain in the form of chemical bonds. Therefore, they can be maintained for a longer time in a polymer material product, with lower physical losses and longer efficacy.

There is no special restriction on the product forms of the above polymer materials, such as but not limited to a coating, an adhesive, a foaming material, or an elastomer. The elastomer is preferably a polyurethane elastomer.

In some polymer materials with high polarity, high acidity, and requiring adding a large amount of light stabilizer, the application effect of the reactive composite light stabilizer of the present invention is more significant. Preferably, the polymer material is an amino acrylic resin coating, an acrylic polyurethane varnish, or a polyurethane powder coating. The specific solid content of the coating may be the commonly used solid content in this field, such as 20-100%, the solid content of the liquid coating is typically 20-70 wt%, and the solid content of the powder coating is 100%. In particular, for high solid content coating, e.g., the solid content of 45-70 wt%, the reactive composite light stabilizer according to the present invention still provides a better effect.

In order to promote a better compatibility between the light stabilizer and the polymer material so as to further improve the anti-aging performance of the material, in one preferred embodiment, when the polymer material is an amino acrylic resin coating or an acrylic polyurethane varnish, the reactive ultraviolet light absorber in the reactive composite light stabilizer is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine (UV-400), and the reactive hindered amine light stabilizer is 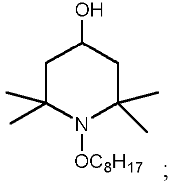 when the polymer material is a polyurethane powder coating, the reactive ultraviolet light absorber in the reactive composite light stabilizer is 2-[2-hydroxy-4-[3-(2-ethylhexoxy)-2-hydroxypropyl]phenyl]-4,6-bis(2,4-dimethylphenyl)-1,3,5-triazine (UV405), and the reactive hindered amine light stabilizer is 2,4-bis[N-butyl-(1-cyclohexoxy-2,2,6,6-tetramethylpiperidin-4-yl)amino]-6-(2-hydroxyethylamine)-1,3,5-triazine (UV-152).

More preferably, the reactive composite light stabilizer is incorporated into a polymer material in an amount of 0.1~5wt%, further preferably 1-2%.

In summary, the present invention combines the reactive ultraviolet light absorber and the reactive hindered amine light stabilizer with the same morphology to obtain a homogeneous and stable composite light stabilizer, which makes the addition conveniently and simplifies the use procedure. While meeting the application as a conventional polymer material, the reactive composite light stabilizer can also meet the compatibility of the ultraviolet light absorber and the hindered amine light stabilizer with a special polymer system, as well as the compatibility at high addition amount. It has the widest range of material applications currently available. The reactive composite light stabilizer has excellent long-term anti-aging performance compared with the conventional non-reactive composite light stabilizer, or those containing only single type of reactive composite light stabilizer.

The following examples are presented to provide a more detail description of the present application, which cannot be construed as limiting the scope of the present application.

### Material Applicability Verification Test

### (1) Improvement of compatibility of the reactive hindered amine light stabilizer and a composite product with a ultraviolet light absorber in a highly polar system

A high solid content coating system tends to be higher polarity and is catalyzed by strong acids. Such coating system requires the addition of both ultraviolet light absorber and hindered amine light stabilizer. The conventional hindered amine light stabilizers are UV-292 and UV-123, which are liquid at room temperature. These two hindered amine light stabilizers were used as a reference, the compatibility of the reactive hindered amine light stabilizer 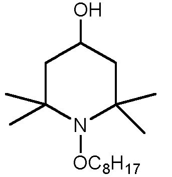 (RLHA) of the present invention is tested in high solid content coating systems.

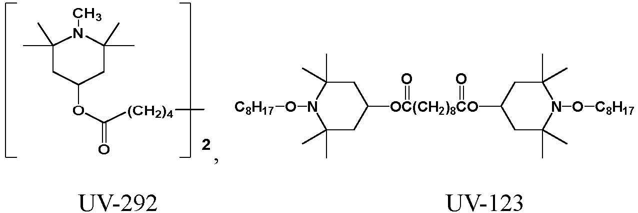

Selecting a typical single component high solid content coating (composition formulations are shown in Table 1 below, with a solid content of 62 wt%):

**Table 1**

| Material name | Addition ratio (wt%) |
|---|---|
| Setalux 1795 | 25.3 |
| Setal 168 | 3.2 |
| Cymel 303 | 4.2 |
| Cymel 1168 | 1 |
| BYK 378 | 0.42 |
| BYK 306 | 0.25 |
| Fumed silica | 0.5 |
| Pigment | 24 |
| Methylpentyl ketone | 10 |
| Butyl acetate | 16 |
| Solvent Oil 100# | 15 |
| Nacure 5225 | 0.13 |

| | |
|---|---|
| Setalux 1795, Setal 168: Hydroxy acrylic resin, purchased from Allnex Resins (China) Co., Ltd.; Cymel 303, Cymel 1168: Amino resin, purchased from Changxin Resins (Guangdong) Co., Ltd.; Fumed silica: purchased from Evonik, AEROSIL R972; BYK 378, BYK 306: Organosilicon leveling agent, purchased from BYK Additives (Shanghai) Co., Ltd.; Nacure 5225: Acid catalyst, purchased from King Industries Inc, USA. | |

### Example A-1

The tested coating sample was formulated by adding 3 wt% of RLHA to the above single component high solid content coating.

### Example A-2

The tested coating sample was formulated by adding 2 wt% of RLHA and 5wt% of UV-400 (Note: the effective content of UV-400 is 85%, the rest is 15% propylene glycol monomethyl ether solvent, the same below) to the above single component high solid content coatings without stabilizer.

### Comparative Example A-1

The tested coating sample was formulated by adding 1% of UV-123 (non-reactive, liquid at room temperature) to the above single component high solid content coatings without stabilizer.

### Comparative Example A-2

The tested coating sample was formulated by adding 1 wt% of UV-123 and 4.25% of UV-1164 (non-reactive, solid at room temperature) to the above single component high solid content coatings without stabilizer.

### Comparative Example A-3

The tested coating sample was formulated by adding 1 wt% of UV-152 (purchased from BASF, Tinuvin 152) and 4.25% of UV-1164 (non-reactive, solid at room temperature) to the above single component high solid content coatings without stabilizer.

### Detecting Procedure:

The above coatings were sprayed on an iron plate, levelled for 10 minutes and then observed whether there was any precipitation on the surface; and

The iron plated was placed into an oven for baking and curing under the conditions of 140 °C for baking 30 minutes, the film thickness after curing was of 30 microns. After baking was completed, the surface was observed for any precipitation and wiped with fingers to confirm the precipitate.

The results of Example A-1 and Comparative Example A-1 are shown in Table 2:

**Table 2**

| | Comparative Example A-1 | Example A-1 |
|---|---|---|
| Compatibility Test Results | No obvious precipitate was observed after spraying. | No obvious precipitate was observed after spraying. |
| | Incompatibility of the cured paint film occurred with oily precipitate on the surface. | Good compatibility of the cured paint film was observed with no precipitation. |

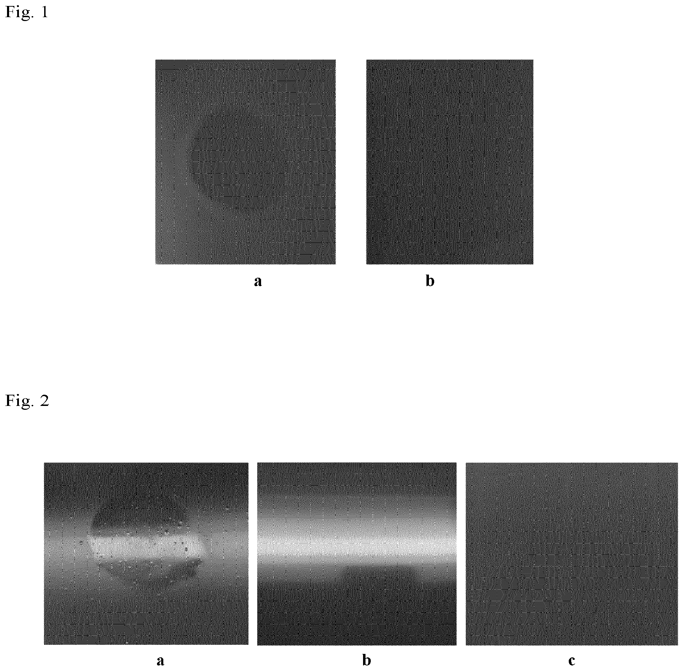

The compatibility of a light stabilizer in high solid content coatings is a prominent issue in the industry. In Fig.1, a and b showed the photographs of the cured paint film in Comparative Example A-1 and Example A-1, respectively. It can be seen from the photographs that there was a layer of oily precipitate on the surface of the paint film in Comparative Example A-1 (the white part around the picture), and the middle area was the original color revealed after wiping with fingers. The paint film system in Example A-1 was homogeneous without precipitation, indicating that the above light stabilizer of the present invention has better compatibility with the coating system. The oily precipitate in Comparative Example 1 was analyzed to be UV-123.

The results of Example A-2, Comparative Example A-2 and Comparative Example A-3 are shown in Table 3:

**Table 3**

| | Comparative Example A-2 | Comparative Example A-3 | Example A-2 |
|---|---|---|---|
| Compatibility Test Results | No obvious precipitate was observed after spraying. | No obvious precipitate was observed after spraying. | No obvious precipitate was |
| | Incompatibility of the cured paint film occurred with oily and particulate precipitate on the surface. | Incompatibility of the cured paint film occurred with particulate precipitate on the surface. | observed after spraying. |
| | | | Good compatibility of the cured paint film was observed with no precipitation. |

In Fig. 2, a, b and c showed the photographs of the cured paint film in Comparative Example A-2, Comparative Example A-3 and Example A-2, respectively. It can also be seen from the photographs that there was a layer of oily precipitate on the surface of the paint film in Comparison Example A-2, and there were some obvious particulate precipitates (whitish portion and dotted portion around the picture). The oily precipitate was analyzed to be UV123, and the particulate precipitate was analyzed to be UV-1164. The paint film system in Example A-2 was homogeneous without precipitation, indicating that the above composite light stabilizer of the present invention has better compatibility with the coating system.

### (2) Improvement of coating curing of a reactive light stabilizer and a composite product with ultraviolet light absorber:

The test was also based on the high solid content coatings shown in Table 1 above. Under an insufficient baking condition, the influence of alkalinity on the cured film formation of the coatings was particularly significant. Under a condition that was slightly lower than a normal baking condition (baking at 130 °C for 20 minutes), the resin reaction in the paint film was affected, and the final hardness was also varied significantly, even failing to meet the requirements for use. The effects of different light stabilizers on the curing performance of the coating were investigated in the following Examples and Comparative examples:

### Example A-3

The tested coating sample was formulated by adding 1 wt% of RLHA to the above single component high solid content coatings without stabilizer.

### Example A-4

The tested coating sample was formulated by adding 1 wt% of RLHA and 2 wt% of UV-400 to the above single component high solid content coatings without stabilizer.

### Comparative Example A-3

The tested coating sample was formulated by adding 1% of UV-292 to the above single component high solid content coatings without stabilizer.

### Comparative Example A-4

The tested coating sample was formulated by adding 1 wt% of UV-292 (non-reactive) and 2 wt% of UV-400 to the above single component high solid content coatings without stabilizer.

### Comparative Example A-5

The above single component high solid content coatings without light stabilizers were used as a blank reference.

### Detecting Procedure:

The above coatings were sprayed on an iron plate, levelled for 10 minutes and then baked in an oven for curing. The normal curing condition was to bake at 140 °C for 30 minutes, while the insufficient condition was to bake at 130 °C for 20 minutes. The film thickness after curing was 30 microns.

After baking, they were left at room temperature for three days. The hardness of the cured paint film was then measured. The K-pendulum testing instrument was BYK Pendulum Hardness Tester, with model 5861. The Martens Hardness testing instrument was FISCHERSCOPE ^{®} HM2000 series micro nanometer hardness tester.

The results were shown in Table 4:

**Table 4**

| | K-pendulum Hardness (s) | Martens Hardness (N/mm²) |
|---|---|---|
| Comparative Example A-3 | 134 | 51.5 |
| Comparative Example A-4 | 132 | 50.2 |
| Comparative Example A-5 | 171 | 70.7 |
| Example A-3 | 168 | 70.4 |
| Example A-4 | 170 | 70.5 |

It was known from the hardness data in the table that using the reactive composite light stabilizer of the present invention did not affect the curing performance of the coating under insufficient baking condition, and the hardness value was substantively unchanged compared with that of the blank reference coating. However, the light stabilizer in Comparative Example had a serious impact on the curing performance of the coating under insufficient baking, resulting in a significant decrease in the hardness of the paint film.

In summary, based on the above compatibility data, it can be seen that the conventional composite products appear to have great limitations in a high solid content coating: (1) conventional HALS (UV-123) in the case of a high solid content coating will precipitate out even at a very low addition amount, making it impossible to be a composite; (2) conventional HALS (UV-292) in the case of a high solid content coating will affect the curing, especially in the case of insufficient baking that may occur in practice; (3)conventional UVA (UV-1164) in a polar high solid content coating will precipitate out if the addition amount is too high. When the reactive composite light stabilizer of the present invention is used in a high solid content coating, the change in the chromatic aberration of the coating is significantly little, the long-term anti-aging performance of the paint film can be ensured.

### Long-term Weather Fastness Effect Evaluation Test

### (1) Improvement of weather fastness of the reactive composite light stabilizer in a high solid content coating

Based on the above high solid content coating systems, an effective compatibility cannot be achieved with conventional HALS. The composite light stabilizer products can meet the use, and have a better anti-aging effect in long-term use. Tests were conducted as follows, different types of light stabilizers were added to obtain the following four groups of tested coating samples.

### Example B-1

The tested coating sample was formulated by adding 1 wt% of UV-400 and 0.5 % of RLHA to the above high solid content coating without stabilizer.

### Comparative Example B-1

The tested coating sample was formulated by adding 1.5 wt% of UV-400 to the above high solid content coating without stabilizer.

### Comparative Example B-2

The tested coating sample was formulated by adding 0.85 wt% of UV-1164 and 0.5 wt% of UV-292 to the above high solid content coating without stabilizer.

### Comparative Example B-3

The above high solid content coating without a light stabilizer was used as a blank reference.

The coating test sample plate was made by spraying as follows: the plate was sprayed to the film thickness of 30 microns, levelled at room temperature for 10 minutes, and baked in an oven at 140 °C for 30 minutes. QUV test was carried out after 3 days of surface adjustment.

The testing conditions for QUV were as follows: the tested plates were placed in the QUV ultraviolet aging lamps box (model: Q-Lab QUV/Spray UV fluorescence aging test box), and the testing standard was referred to ASTM G154-06 cycle 1. The tested plates were taken out at an interval to measure the chromatic aberration value. The colorimeter was the X-rite MA5 Spectrophotometer.

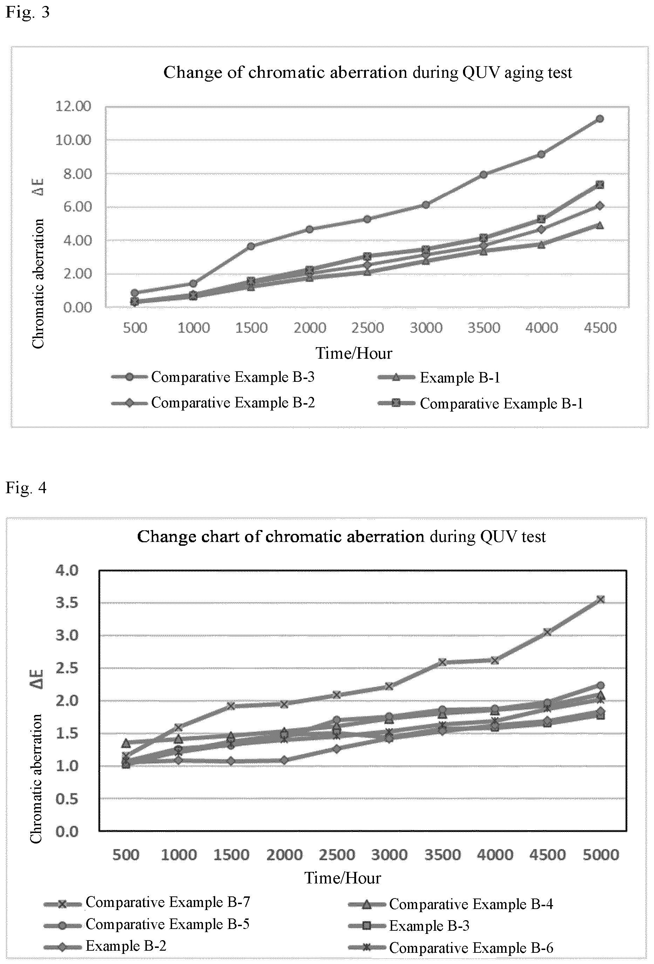

The test results were shown in Fig. 3, which showed the change curves of the chromatic aberration during the QUV aging test for the coatings in Example B-1 and Comparative Examples B-1 to B-3. It was known from the curves in the figure that the combination of UV-400 and RLHA provided according to the present invention was applied to the high solid content coating, and had a better anti-aging performance and significantly long-effective property.

### (2) Migration resistance in plastic coating

The surface of plastic substrate can be coated with a layer of coating in order to achieve a beautifying effect and protective effect. In some outdoor applications, the coating may be aged by light and heat. The addition of hindered amine light stabilizer can slow down this process. However, many plastic substrates themselves have a good plasticity and provide some "free space" within the substrate for the migration of small molecule of a hindered amine light stabilizer. TPO, a typical material with good plasticity, was chosen for this test.

The 2K acrylic polyurethane varnish was selected for addition objects and the components were shown in Table 5:

**Table 5**

| | |
|---|---|
| Setalux 1274 BA-70 | 62.5 |
| BYK 378 | 0.2 |
| Methyl pentyl ketone | 16 |
| n-Butyl alcohol | 1.8 |
| Acetone | 7 |
| Butyl acetate | 12.45 |
| DBTDL (5% solution) | 0.05 |

The above was a two-component (2K) acrylic polyurethane varnish coating system based on isocyanate curing: the A-component formulation was shown in Table 5, the B-component was Desmodur N3300 (Covestro), and A:B = 100: 20.45 by weight.

### Material Notes:

Desmodur N3300: Aliphatic polyisocyanate based on hexamethylene diisocyanate (HDI) as the substrate, purchased from Covestro Polymer (China) Co., Ltd;
Setalux 1274 BA-70: Hydroxyacrylic resin, purchased from Allnex Resins (China) Co., Ltd.;
BYK 378: Organosilicon leveling agent, purchased from BYK Additives (Shanghai) Co., Ltd.;
DBTDL: Dibutyltin dilaurate, catalyst, purchased from HEOWNS (Tianjin) Biotechnology Co., Ltd.

### Example B-2

The tested coating sample was formulated by adding 1 wt% of UV-400 and 0.5% of RLHA to the above 2K acrylic polyurethane varnish without a light stabilizer.

### Example B-3

The tested coating sample was formulated by adding 0.85 wt% of UV-405 and 0.5 wt% of UV-RLHA to the above 2K acrylic polyurethane varnish without a light stabilizer.

### Comparative Example B-4

The tested coating sample was formulated by adding 1 wt% of UV-400 and 0.5wt% of UV-123 to the above 2K acrylic polyurethane varnish without a light stabilizer.

### Comparative Example B-5

The tested coating sample was formulated by adding 0.85 wt% of UV-1164 and 0.5 wt% of RLHA to the above 2K acrylic polyurethane varnish without a light stabilizer (Note: the effective content of UV-400 was 85%, so solid non-reactive ultraviolet light absorber UV-1164 was added in an equal effective weight).

### Comparative Example B-6

The tested coating sample was formulated by adding 0.85 wt% of solid reactive UVA (abbreviated as RUV, the structure was shown in the formula below, the source thereof can refer to CN112552250A) and 0.5 wt% of RLHA to the above 2K acrylic polyurethane varnish without a light stabilizer.

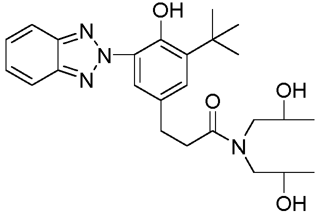

### Comparative Example B-7

The above 2K acrylic polyurethane varnish without a light stabilizer was used as blank reference.

The coating test sample plate was made by spraying as follows: TPO (PP: SEBS=1:1) was selected as the substrate, sprayed with blue metal base paint, levelled at room temperature for 10 minutes; the tested coating sample was sprayed on the blue metal base paint, the film thickness was controlled to 30 microns, levelled at room temperature for 10 minutes, and baked in an oven at 80 °C for 30 minutes. QUV test was carried out after 7 days of surface adjustment.

The testing condition for QUV was as follows: the tested sample plates were placed in the QUV ultraviolet aging lamps box (model: Q-Lab QUV/Spray UV fluorescence aging test box), and the testing standard was referred to ASTM G154-06 cycle 1. The tested plates were taken out at an interval to measure the chromatic aberration value. The colorimeter was the X-rite MA5 Spectrophotometer.

The test results were shown in Fig. 4, which showed the change curves of the chromatic aberration during the QUV aging test for the coatings in Examples B-2 to B-3 and Comparative Examples B-4 to B-7.

Other solid reactive products such as RUV and UV-405 must be dissolved before adding. There were two negative consequences: it is not as easy as to add UV-400 and RLHA which both were in a form of liquid in the same way; the introduction of solvents increases VOC emission, which is particularly unacceptable for a high solid content system.

In particular, it can be seen from the curves in Fig. 4 that the combination of UV-400 and RLHA of the present invention significantly improved the long-term anti-aging performance of the paint film.

In addition, it can be seen from the curves in Fig. 4 that the effect of the reactive triazine composite (UV-400 and RLHA) was better than that of the reactive benzotriazole composite (RUV and RLHA), and the long-term anti-aging effect of reactive solid HALS composite (UV-405 and UV-RLHA) was better than that of the reactive benzotriazole composite (RUV and RLHA). The effect of the reactive solid HALS composite (UV-405 and UV-RLHA) was substantively equivalent to that of the liquid reactive HALS composite (UV-400 and RLHA), but there were two negative consequences mentioned above.

### (3) Long-term weather fastness in powder coatings

Powder coatings are completely free of volatile organic compounds (VOC) and have excellent environmental characteristics. Therefore, the attention and use of powder coatings have become increasingly widespread in recent years. Early powder coatings were generally used in relatively low- and mid-end applications, with less emphasis on weather fastness, especially long-term weather fastness. Liquid reactive composite light stabilizers have excellent long-term weather fastness performance in liquid coatings, but the addition forms that can be used in powder coatings prefer a powder rather than a liquid. The reactive ultraviolet light absorber UV-405 combinates with the reactive hindered amine light stabilizer UV-152 in the present invention to form a powder reactive composite light stabilizer, and have been successfully applied in polyurethane-type powder coatings which have been gradually maturing in recent years. Along-term light-aging test was performed by comparing a conventional non-reactive ultraviolet light absorber UV-1164 and the reactive hindered amine light stabilizer UV-622.

The formula of the polyurethane powder coating used was shown in Table 6:

**Table 6**

| Material name | Addition ratio (wt%) |
|---|---|
| CRYLCOAT 2839-0 | 39.4 |
| ADDITOL P932 | 15.3 |
| Titanium Dioxide | 26.5 |
| Barium Sulfate | 11.1 |
| Leveling agents GLP59 | 5 |
| Benzoin | 0.5 |
| Catalyst ST-70 | 0.2 |
| Antioxidant | 0.5 |
| Hindered amine light stabilizer | 0.5 |
| Ultraviolet light absorber | 1 |

| | |
|---|---|
| CRYLCOAT 2839-0: Hydroxy polyester resin, purchased from Allnex Resins (China) Co., Ltd. ADDITOL P932: Aliphatic isocyanates, purchased from Allnex Resins (China) Co., Ltd. Titanium Dioxide: DuPont R902. Benzoin, Leveling agents: purchased from South Sea Chemical (Ningbo) Co., Ltd. Catalyst: purchased from Estron Chemical Co., Trade name Octaflow ST-70. Antioxidant: Rianox B225, purchased from Rianlon (Tianjin) Corporation. UV-152: purchased from BASF, Tinuvin 152. | |

### Example B-4

In the formulation of Table 6, the hindered amine light stabilizer was UV-152 and the ultraviolet light absorber was UV-405.

### Comparative Example B-8

In the formulation of Table 6, the hindered amine light stabilizer was UV-622 and the ultraviolet light absorber was UV-1164.

### Comparative Example B-9

In the formulation of Table 6, the hindered amine light stabilizer and the ultraviolet light absorber were not added as a blank reference.

The coating test sample plate was made by spraying as follows: the powder coating of the above formulation was sprayed to the film thickness of 50 microns, and baked in an oven at 200 °C for 15 minutes. QUV test was carried out after 3 days of surface adjustment.

The testing conditions for QUV were as follows: the tested sample plates were placed in the QUV ultraviolet aging lamps box (model: Q-Lab QUV/Spray UV fluorescence aging test box), and the testing standard was referred to ASTM G154-06 cycle 1. The tested plates were taken out at regular intervals to measure the chromatic aberration value. The colorimeter was the X-rite MA5 Spectrophotometer.

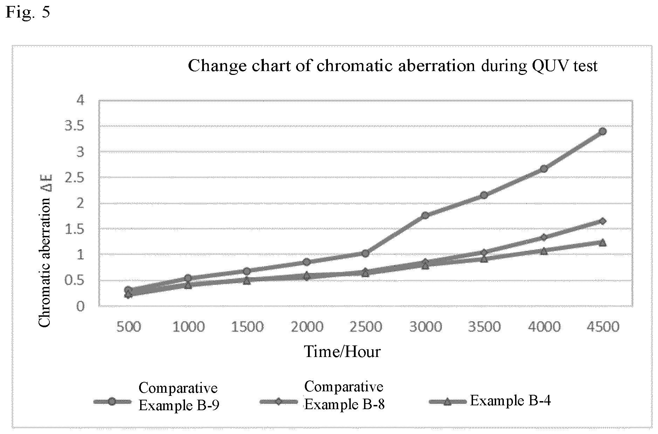

The test results were shown in Fig. 5, which showed the change curves of the chromatic aberration during the QUV aging test for the coatings in Example B-4 and Comparative Examples B-8 to B-9. It can also be seen from the curves in Fig. 5 that the combination of UV-405 and UV-152 of the present invention improved the long-term anti-aging performance of the paint film more significantly.

The above descriptions are merely some preferred examples of the present invention and are not intended to limit the present invention. Various modifications and variations of the present invention are possible for those skilled in the art. Any modifications, equivalent substitutions, improvements, etc. made within the spirit and principles of the present invention shall be included in the scope of protection of the present invention.

## Claims

1. A reactive composite light stabilizer, comprising a reactive ultraviolet light absorber and a reactive hindered amine light stabilizer, and the reactive ultraviolet light absorber is a reactive triazine ultraviolet light absorber.

2. The reactive composite light stabilizer according to claim 1, wherein the reactive ultraviolet light absorber is selected from a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and/or 2-[2-hydroxy-4-[3-(2-ethylhexyloxy)-2-hydroxypropoxy]phenyl]-4,6-bis(2,4-dimethylphenyl)-1,3,5-triazine; the reactive hindered amine light stabilizer is selected from 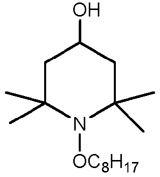 and/or 2,4-bis[N-butyl-(1-cyclohexyloxy-2,2,6,6-tetramethylpiperidin-4-yl)amino]-6-(2-hydroxyethylamine)-1,3,5-triazine; preferably, both the reactive ultraviolet light absorber and the reactive hindered amine light stabilizer are liquid or solid at room temperature between 20°C and 30°C.

3. The reactive composite light stabilizer according to claim 2, wherein the reactive ultraviolet light absorber is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and the reactive hindered amine light stabilizer is 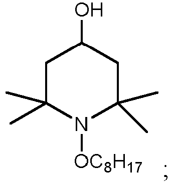 or
the reactive ultraviolet light absorber is 2-[2-hydroxy-4-[3-(2-ethylhexyloxy)-2-hydroxypropoxy]phenyl]-4,6-bis(2,4-dimethylphenyl)-1,3,5-triazine, and the reactive hindered amine light stabilizer is 2,4-bis[N-butyl-(1-cyclohexyloxy-2,2,6,6-tetramethylpiperidin-4-yl)amino]-6-(2-hydroxyethylamine)-1,3,5-triazine;
preferably, the weight ratio of the reactive ultraviolet light absorber to the reactive hindered amine light stabilizer is (0.1-10): 1, preferably (1-5): 1.

4. Use of the reactive composite light stabilizer according to any one of claims 1 to 3 in polymer material.

5. Use of a reactive hindered amine light stabilizer in polymer material, wherein the reactive hindered amine light stabilizer is 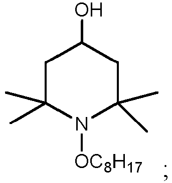 preferably, the polymer material is a coating.

6. Alight-stable modified polymer material comprising a polymer material and a light stabilizer, wherein the light stabilizer is the reactive composite light stabilizer according to any one of claims 1 to 3.

7. The light-stable modified polymer material according to claim 5, wherein the polymer material is one or more of a polyurethane material, an amino resin material, an acrylic resin material and an epoxy resin material; preferably, the polymer material is a coating, an adhesive, a foaming material or an elastomer.

8. The light-stable modified polymer material according to claim 5, wherein the polymer material is an amino acrylic resin coating, an acrylic polyurethane varnish, or a polyurethane powder coating.

9. The light-stable modified polymer material according to claim 8, wherein when the polymer material is the amino acrylic resin coating or the acrylic polyurethane varnish, the reactive ultraviolet light absorber in the reactive composite light stabilizer is a mixture of 2-[4-[2-hydroxy-3-tridecyloxypropyl]oxy-2-hydroxyphenyl]-4,6-bis(2,4-dimethylphenyl)-1,3,5-triazine and 2-[4-[2-hydroxy-3-dodecyloxypropyl]oxy]-2-hydroxyphenyl]-4,6-bis(2,4-dimethylphenyl)-1,3,5-triazine, and the reactive hindered amine light stabilizer is 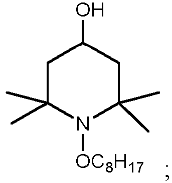 when the polymer material is the polyurethane powder coating, the reactive ultraviolet light absorber in the reactive composite light stabilizer is 2-[2-hydroxy-4-[3-(2-ethylhexyloxy)-2-hydroxypropoxy]phenyl]-4,6-bis(2,4-dimethylphenyl)-1,3,5-triazine, and the reactive hindered amine light stabilizer is 2,4-bis[N-butyl-(1-cyclohexyloxy-2,2,6,6-tetramethylpiperidin-4-yl)amino]-6-(2-hydroxyethylamine)-1,3,5-triazine.

10. The light-stable modified polymer material according to any one of claims 5 to 9, wherein the reactive composite light stabilizer is incorporated into the polymer material in an amount of 0.1~5wt%, preferably 1~2%.
